# EUROPÄISCHE PATENTSCHRIFT

(11) **EP 0 942 094 B1**
(45) Veröffentlichungstag und Bekanntmachung des Hinweises auf die Patenterteilung: **04.09.2002**
(21) Anmeldenummer: 99104931.3
(22) Anmeldetag: 11.03.1999
(51) Int. Cl.: D06F 58/28, G01N 27/04

(54) **Verfahren zum Bestimmen des Feuchtigkeitsgehalts von textilen Gütern in einem Wäschetrockner**
Method for determining the moisture content of textile articles in a laundry drier
Procédé pour déterminer le taux d'humidité d'articles textiles dans un sèche-linge

(30) Priorität: 13.03.1998 DE 19811021
(43) Veröffentlichungstag der Anmeldung: 15.09.1999
(73) Patentinhaber: BSH Bosch und Siemens Hausgeräte GmbH, 81669 München (DE)
(72) Erfinder: Meerpohl, Hansjörg Dipl.-Ing., 10555 Berlin (DE); Pech, Dietmar Dipl.-Ing., 12105 Berlin (DE)

(56) Entgegenhaltungen:
- EP-A- 0 173 062
- EP-A- 0 388 939
- WO-A-85/05385
- FR-A- 2 596 864
- US-A- 3 758 959

## Beschreibung

Die vorliegende Erfindung betrifft ein Verfahren zum Bestimmen des Feuchtigkeitsgehalts von textilen Gütem in einem Wäschetrockner nach dem Oberbegriff des Anspruchs 1.

Beim Trocknen von textilen Gütern in einem Wäschetrockner ist es von großem Vorteil, den aktuellen Feuchtigkeitsgehalt der textilen Güter zu kennen. Anhand dieser Information läßt sich beispielsweise die Restzeit des Trocknungsvorganges angeben, der Trocknungsprozeß optimal steuern oder die Heizleistung bedarfsgerecht anpassen. Weiterhin läßt sich bei Kenntnis des Feuchtigkeitsgehalts der Trocknungsvorgang genau beim gewünschten Restfeuchtegehalt beenden. Abhängig davon, wie mit den textilen Gütern weiter verfahren werden soll, läßt sich so der optimale Restfeuchtegehalt einstellen. Wenn beispielsweise die textilen Güter nach dem Trocknen gebügelt werden sollen, ist dafür ein höherer Restfeuchtegehalt vorteilhaft als für ihre Ablage.

Der Feuchtigkeitsgehalt von textilen Gütern in einem Wäschetrockner wird üblicherweise durch die Messung ihres elektrischen Leitwertes bestimmt, wobei der Feuchtigkeitsgehalt proportional vom Leitwert abhängt. In der Regel werden dazu zwei Elektroden an die textilen Güter angelegt, von denen eine üblicherweise die Trommel ist, in der sich die textilen Güter befinden. An die zwei Elektroden wird über einen Widerstand eine Spannung angelegt, die einen Stromfluß durch die textilen Güter zur Folge hat. Die dabei an den textilen Gütern abfallende Wäschespannung wird an den Elektroden gemessen und daraus der Leitwert bzw. der Feuchtigkeitsgehalt der textilen Güter bestimmt.

Nachteiligerweise bildet sich bei diesem Verfahren beim Anlegen einer Spannung zur Leitwertmessung zwischen den feuchten textilen Gütern und den Elektroden ein Batterieelement aus, dessen Spannung insbesondere von der Leitfähigkeit des Wassers, der Art und Beschaffenheit der verwendeten Werkstoffe und der Höhe und Polarität der zur Messung angelegten Spannung abhängig ist. Diese im folgenden "Polarisationsspannung" genannte Spannung des Batterieelementes kann sich zu der an den textilen Gütern abfallenden Wäschespannung addieren und damit die Bestimmung des Leitwerts verfälschen. Diese Polarisationsspannung tritt insbesondere bei feuchter Wäsche auf, so daß die feuchteren Wäschestücke davon stärker betroffen sind.

Aus der DE 34 17 482 A1 ist ein Verfahren bekannt, bei dem zu Beginn des Trocknungsprozesses der Leitwert der noch nassen textilen Güter gemessen und damit unter anderem auch ein von der Wäschetrocknerbeladung und der Leitfähigkeit des Wassers abhängiger Korrekturfaktor ermittelt wird. Dieser Korrekturfaktor wird gespeichert und im Verlauf des Trocknungsvorganges dazu verwendet, den gemessenen Leitwert, der von verschiedenen Faktoren verfälscht wird, zu korrigieren. Dabei wird auch die Polarisationsspannung erfaßt und kompensiert. Nachteiligerweise wird dieser Korrekturfaktor nur zu Beginn des Trocknungsprozesses ermittelt, so daß Änderungen der Polarisationsspannung im Verlauf der Trocknung nicht berücksichtigt werden können. Darüber hinaus ist der Korrekturfaktor von mehreren Einflußgrößen abhängig, die unterschiedlichen Änderungen unterliegen, so daß eine gezielte Kompensation der Polarisationsspannung nicht möglich ist.

Aus dem Stand der Technik sind weiterhin Verfahren bekannt, bei denen zur Messung des Leitwerts der textilen Güter eine gepulste Gleichspannung oder eine Wechselspannung verwendet wird, bei der die Polarisationsspannung sehr gering ist oder gar nicht auftritt. Diese Verfahren haben insbesondere den Nachteil, einen hohen Aufwand zur Erzeugung der speziellen Meßspannung und zur Bestimmung des Leitwertes bzw. des Feuchtigkeitsgehalts zu erfordern.

Der vorliegenden Erfindung liegt deshalb die Aufgabe zu Grunde, ein Verfahren zum Bestimmen des Feuchtigkeitsgehalts von textilen Gütern in einem Wäschetrockner der eingangs genannten Art derart zu verbessern, daß die Verfälschung der Leitwertbestimmung durch die Polarisationsspannung kompensiert werden kann.

Diese Aufgabe wird durch die Merkmale des Anspruchs 1 gelöst.

Erfindungsgemäß wird zu diesem Zweck die Bestimmung des Leitwertes unterbrochen und der Stromfluß durch die textilen Güter zeitweise unterbrochen oder zumindest stark verringert. Anschließend kann an den Elektroden, die die textilen Güter berühren, die Polarisationsspannung zwischen den Elektroden und den textilen Gütern bestimmt werden. Diese Polarisationsspannung wird bei der Bestimmung des elektrischen Leitwertes der textilen Güter berücksichtigt.

Durch die Abschaltung des Stromflusses durch die textilen Güter fällt an ihnen keine Wäschespannung mehr ab, so daß die in diesem Fall an den Elektroden gemessene Spannung im wesentlichen der Polarisationsspannung entspricht, die so bestimmt und bei der Leitwertbestimmung berücksichtigt werden kann. Durch dieses Verfahren läßt sich bei gleichbleibendem oder gering erhöhtem Schaltungsaufwand der Störeinfluß der Polarisationsspannung bestimmen und bei der Bestimmung des Leitwertes kompensieren. Weiterhin können mit diesem Verfahren die galvanischen Einflüsse durch Materialunterschiede eliminiert werden. Zusätzlich können Alterungseffekte an den Materialien und die unterschiedliche Leitfähigkeit des in den textilen Gütern enthaltenen Wassers kontinuierlich berücksichtigt und kompensiert werden.

Die Berücksichtigung der Polarisationsspannung kann beispielsweise dadurch erfolgen, daß sie oder ein sie berücksichtigender Korrekturwert von der Wäschespannung subtrahiert wird. Im einfachsten Fall kann die Polarisationsspannung direkt von der Wäschespannung subtrahiert werden, so daß sie bereits mit dieser einfachen Rechenoperation kompensiert wird. Daneben kann es in der Praxis erforderlich sein, ausgehend von der Polarisationsspannung einen Korrekturwert zu ermitteln, der von der Wäschespannung subtrahiert wird. Dies ist in den Fällen vorteilhaft, in denen die gemessene Polarisationsspannung nicht mit der übereinstimmt, die während der Leitwertmessung wirksam ist und diese verfälscht.

Vorteilhafterweise läßt man zwischen der Bestimmung des Leitwertes und der Bestimmung der Polarisationsspannung eine Totzeit verstreichen, in der der Stromfluß durch die textilen Güter unterbrochen oder zumindest stark verringert wird. In dieser Zeit kann sich die Polarisationsspannung auf einen stationären Zustand einstellen, so daß sie sicherer bestimmt werden kann. Eine in dieser Zeit möglicherweise erfolgte Änderung des Wertes kann wie vorstehend beschreiben durch die Bildung eines Korrekturwertes berücksichtigt werden.

Erfahrungsgemäß genügt eine Totzeit von ungefähr wenigstens drei bis zehn Sekunden und vorzugsweise von wenigstens fünf Sekunden. Damit läßt sich ein vorteilhafter Kompromiß zwischen einer sicheren und einer schnellen Bestimmung der Polarisationsspannung erzielen.

Auf einfache Weise wird der Stromfluß durch die textilen Güter durch eine Spannung erzeugt, die über einen Widerstand an die Elektroden angeschlossen wird, die die textilen Güter berühren. Da Wäschetrockner nahezu ausnahmslos elektrisch betrieben werden und demzufolge verschiedene Spannungen ohnehin zur Verfügung stehen, läßt sich auf diese Weise durch geringsten Schaltungsaufwand ein Stromfluß durch die textilen Güter erzeugen.

Um den Stromfluß durch die textilen Güter zu unterbrechen oder zu verringern, wird die Spannung abgeschaltet oder emiedrigt. Die in der Elektrik bzw. Elektronik verwendeten Schaltungen weisen üblicherweise Spannungsausgänge mit verschiedenen Spannungen auf, die bedarfsweise ein- oder ausgeschaltet werden können. Daneben gibt es auch sogenannte "three-state-Ausgänge", die sich zusätzlich in einen hochohmigen Zustand schalten lassen, in dem am Ausgang keine definierte Spannung anliegt und kein Strom fließen kann. Der Stromfluß kann so mittels gebräuchlicher Bauteile unterbrochen oder verringert werden, indem die Ausgangsspannung verändert oder abgeschaltet wird.

Der Stromfluß kann auch dadurch unterbrochen oder verringert werden, daß der den Elektroden vorgeschaltete Widerstand erhöht bzw. der ihn durchfließende Strom verringert wird. Dazu kann ein veränderlicher Widerstand, wie beispielsweise ein Fotowiderstand, oder ein Optokoppler verwendet werden, mit dem der Strom verändert werden kann. Auch kann in Reihe mit einem nicht veränderbaren Widerstand ein steuerbares Schaltelement geschaltet werden, das zum Unterbrechen des Stromflusses ausgeschaltet wird. Auf diese Weise kann jede beliebige Spannungsquelle verwendet werden, insbesondere auch mit höherer oder besonders konstanter Spannung, ohne daß die Spannungsquelle selbst abschaltbar oder veränderbar sein muß.

Vorteilhafterweise wird zur Erzeugung und/oder der Bestimmung von elektrischen Spannungen und/oder der Bestimmung der Totzeit ein Mikroprozessor bzw. ein Mikrocontroller eingesetzt, dem gegebenenfalls zur Spannungsmessung ein Analog/Digital-Wandler zugeordnet wird.

Dies ist insbesondere dann von Vorteil, wenn zur Steuerung des Wäschetrockners ohnehin ein Mikroprozessor bzw. Mikrocontroller verwendet wird, da in einem solchen Fall kein zusätzlicher Bauteile- oder Schaltungsaufwand erforderlich wird. Da die Arbeitsweise eines Mikroprozessors bzw. -controllers in der Regel von dessen Programmierung abhängt, läßt sich durch geeignete Wahl der Speichereinrichtungen für den Programmcode die Möglichkeit schaffen, die Programmierung nachträglich zu ändern, um zusätzliche Verfahren zu implementieren oder die bereits implementierten zu ändern.

In einer besonders vorteilhaften Ausführungsform wird das erfindungsgemäße Verfahren von einem Mikroprozessor bzw. einem Mikrocontroller durchgeführt. Gegebenenfalls werden dem Mikroprozessor bzw. -controller Einrichtungen zur Spannungsmessung zugeordnet.

Die Verwendung eines Mikrocontrollers empfiehlt sich insbesondere dann, wenn ein solcher ohnehin zur Steuerung des Wäschetrockners vorhanden ist. Das erfinderische Verfahren läßt sich in einem solchen Fall ohne zusätzlichen Aufwand implementieren und mittels des Mikrocontrollers genau und zuverlässig ausführen.

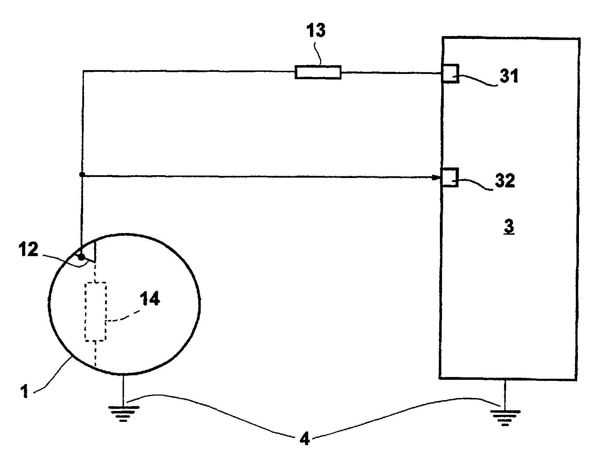

Weitere Einzelheiten, Merkmale und Vorteile der vorliegenden Erfindung ergeben sich aus der nachfolgenden Beschreibung eines Ausführungsbeispiels unter Bezugnahme auf die Zeichnung. Darin zeigt die einzige
- Figur: einen schematischen Schaltungsaufbau zum Durchführen des erfindungsgemäßen Verfahrens.

Der schematische in der Zeichnung dargestellte Aufbau zum Durchführen des Verfahrens zeigt einen in einer Trommel 1 die zu trocknenden textilen Güter als elektrisches Äquivalent ersatzweise darstellenden Widerstand 14 zwischen der einen Elektrode (Wäschetrommel 1) und der anderen Elektrode (gegen die Trommel isoliert eingebauter Mitnehmer 12). Die Trommel 1 ist dazu mit der Gerätemasse 4 verbunden. Die Elektrode 12 ist zum einen an einen Analog/Digital-Eingang 32 eines Mikrocontrollers 3 und zum anderen über einen Widerstand 13 an einen digitalen Ausgang 31 des Mikrocontrollers 3 angeschlossen, der ebenfalls mit der Gerätemasse 4 verbunden ist.

Zur Bestimmung des Feuchtigkeitsgehalts der textilen Güter wird der Spannungsausgang 31 eingeschaltet, wodurch über den Widerstand 13 ein Strom durch den Wäschewiderstand 14 fließt, der an diesem einen Spannungsabfall zur Folge hat. Diese an der Wäsche zwischen den Elektroden 1 und 12 abfallende Wäschespannung liegt am Analog/Digital-Eingang 32 an und wird von diesem gemessen.

Wenn diese Messung abgeschlossen ist, wird der Spannungsausgang 31 abgeschaltet, so daß kein Strom mehr durch den Widerstand 14 der textilen Güter fließt und auch keinen Spannungsabfall an ihm erzeugt. In diesem Zustand ist im wesentlichen nur die Polarisationsspannung wirksam, die sich durch den vorangegangenen Stromfluß ausgebildet hat und zwischen den textilen Gütern und den Elektroden 1 und 12 anliegt. Nach Verstreichen einer Totzeit von fünf Sekunden, die vom Mikrocontroller 3 bestimmt wird, wird über den Analog/Digital-Eingang 32 an der Elektrode 12 die Polarisationsspannung gemessen.

In einem weiteren Schritt wird im Rechenwerk des Mikrocontrollers 3 die Polarisationsspannung von der im vorangegangenen Schritt gemessenen Wäschespannung subtrahiert. Die Differenzspannung entspricht der korrigierten Wäschespannung, aus der beispielsweise durch Kehrwertbildung der Leitwert und damit der Feuchtigkeitsgehalt der textilen Güter bestimmt werden kann.

Somit wird durch die erfindungsgemäße Lösung ein Verfahren zur Bestimmung des Feuchtigkeitsgehalts von textilen Gütern in einem Wäschetrockner geschaffen, bei dem mit keinem oder einem sehr geringen zusätzlichen Aufwand die Polarisationsspannung bei der Leitwertmessung kompensiert und die Bestimmung des Feuchtigkeitsgehalts verbessert werden kann.

Bei diesem Kompensationsverfahren lassen sich zusätzlich auch Alterungs- und Materialeffekte berücksichtigen. Besonders vorteilhaft läßt sich dieses Verfahren in Wäschetrocknern einsetzen, in denen ohnehin ein Mikrocontroller vorhanden und zur Leitwertmessung der textilen Güter eingesetzt wird.

Die Erfindung ist jedoch nicht auf die beschriebene Ausführungsform beschränkt. Beispielsweise ist es auch denkbar, mit anderen als den zur Leitwertmessung eingesetzten Elektroden eine Polarisationsspannung zu bestimmen, die sich gegebenenfalls auch ohne Stromfluß ausbildet, und diese parallel zum Leitwert gemessene Spannung zur Korrektur der Leitwertmessung zu verwenden. Diese parallele Messung der Polarisationsspannung läßt sich auch nach vorangegangenem Stromfluß durch die Elektroden durchführen, um eine Polarisationsspannung zu erzeugen, die der bei der Leitwertmessung auftretenden entspricht.

## Patentansprüche

1. Verfahren zum Bestimmen des Feuchtigkeitsgehalts von textilen Gütern in einem Wäschetrockner, bei dem
- über Elektroden, die die textilen Güter berühren, elektrischer Strom durch die textilen Güter geführt wird, an diesen Elektroden (1,12) die an den textilen Gütern abfallende Wäschespannung bestimmt wird, aus dieser Wäschespannung der Leitwert der textilen Güter bestimmt wird, und
- aus dem Leitwert der Feuchtigkeitsgehalt der textilen Güter bestimmt wird,
**dadurch gekennzeichnet, daß**
- der Stromfluß durch die textilen Güter zeitweise unterbrochen oder zumindest stark verringert wird,
- an den Elektroden (1,12), die die textilen Güter berühren, die Polarisationsspannung zwischen den Elektroden (1,12) und den textilen Gütern bestimmt wird, und
- die Polarisationsspannung bei der Bestimmung des elektrischen Leitwertes der textilen Güter berücksichtigt wird.

2. Verfahren nach Anspruch 1, **dadurch gekennzeichnet, daß** die Polarisationsspannung oder ein Korrekturwert, der die Polarisationsspannung berücksichtigt, von der Wäschespannung subtrahiert wird.

3. Verfahren nach Anspruch 1 oder 2, **dadurch gekennzeichnet, daß** zwischen der Bestimmung des Leitwertes und der Bestimmung der Polarisationsspannung eine Totzeit verstreicht, in der der Stromfluß durch die textilen Güter unterbrochen oder zumindest stark verringert wird.

4. Verfahren nach Anspruch 3, **dadurch gekennzeichnet, daß** die Totzeit im wesentlichen wenigstens 3 bis 10 und vorzugsweise wenigstens 5 Sekunden beträgt.

5. Verfahren nach einem der Ansprüche 1 bis 4, **dadurch gekennzeichnet, daß** der Stromfluß durch die textilen Güter durch eine Spannung erzeugt wird, die über einen Widerstand (13) an die Elektroden (1,12) angeschlossen wird, die die textilen Güter berühren.

6. Verfahren nach Anspruch 5, **dadurch gekennzeichnet, daß** zum Unterbrechen oder Verringern des Stromflusses durch die textilen Güter die Spannung abgeschaltet oder erniedrigt wird.

7. Verfahren nach Anspruch 5, **dadurch gekennzeichnet, daß** zum Unterbrechen oder Verringern des Stromflusses durch die textilen Güter der Widerstand erhöht wird.

8. Verfahren nach einem der Ansprüche 1 bis 7, **dadurch gekennzeichnet, daß** die Erzeugung und/oder die Bestimmung von elektrischen Spannungen und/oder die Bestimmung der Totzeit von einem Mikroprozessor durchgeführt werden.

9. Verfahren nach einem der Ansprüche 1 bis 7, **dadurch gekennzeichnet, daß** es von einem Mikroprozessor beziehungsweise einem Mikrocontroller (3) durchgeführt wird.

## Claims

1. Method of determining the moisture content of textile articles in a laundry drier, in which
- electrical current is led through the textile articles by way of electrodes which contact the textile articles, the laundry voltage which drops away at the textile articles is determined at these electrodes (1, 12), the conductance of the textile articles is determined from this laundry voltage and
- the moisture content of the textile articles is determined from the conductance,
**characterised in that**
- the current flow through the textile articles is periodically interrupted or at least strongly reduced,
- the polarisation voltage between the electrodes (1, 12) and the textile articles is determined at the electrodes (1, 12) contacting the textile articles and
- the polarisation voltage is taken into consideration in the determination of the electrical conductance of the textile articles.

2. Method according to claim 1, **characterised in that** the polarisation voltage or a correction value taking account of the polarisation voltage is subtracted from the laundry voltage.

3. Method according to claim 1 or 2, **characterised in that** a dead time in which the current flow through the textile articles is interrupted or at least strongly reduced elapses between the determination of the conductance and the determination of the polarisation voltage.

4. Method according to claim 3, **characterised in that** the dead time amounts to substantially at least 3 to 10, and preferably at least 5, seconds.

5. Method according to one of claims 1 to 4, **characterised in that** the current flow through the textile articles is produced by a voltage which is connected by way of a resistance (13) to the electrodes (1, 12) contacting the textile articles.

6. Method according to claim 5, **characterised in that** for interruption of or reduction in the current flow through the textile articles the voltage is switched off or lowered.

7. Method according to claim 5, **characterised in that** for interruption of or reduction in the current flow through the textile articles the resistance is increased.

8. Method according to one of claims 1 to 7, **characterised in that** the generation and/or the determination of electrical voltages and/or the determination of the dead time is or are carried out by a microprocessor.

9. Method according to one of claims 1 to 7, **characterised in that** it is performed by a microprocessor or a microcontroller (3).

## Revendications

1. Procédé pour déterminer le taux d'humidité d'articles textiles dans un sèche-linge, dans lequel
- du courant électrique est conduit à travers les articles textiles par l'intermédiaire d'électrodes qui sont en contact avec les articles textiles, la tension du linge baissant sur les articles textiles est déterminée sur ces électrodes (1, 12), la conductance des articles textiles est déterminée à partir de cette tension du linge, et
- le taux d'humidité des articles textiles est déterminé à partir de la conductance,
**caractérisé en ce que**
- le flux de courant à travers les articles textiles est interrompu momentanément ou tout du moins fortement diminué,
- la tension de polarisation entre les électrodes (1, 12) et les articles textiles est déterminée sur les électrodes (1, 12) qui sont en contact avec les articles textiles, et
- la tension de polarisation est prise en considération lors de la détermination de la conductance électrique des articles textiles.

2. Procédé selon la revendication 1, **caractérisé en ce que** la tension de polarisation ou une valeur de correction, qui tient compte de la tension de polarisation, est soustraite de la tension du linge.

3. Procédé selon la revendication 1 ou 2, **caractérisé en ce qu'**entre la détermination de la conductance et la détermination de la tension de polarisation s'écoule un temps mort pendant lequel le flux de courant à travers les articles textiles est interrompu ou tout du moins fortement diminué.

4. Procédé selon la revendication 3, **caractérisé en ce que** le temps mort est essentiellement d'au moins 3 à 10 secondes et qu'il est de préférence d'au moins 5 secondes.

5. Procédé selon l'une des revendications 1 à 4, **caractérisé en ce que** le flux de courant à travers les articles textiles est produit par une tension raccordée aux électrodes (1, 12) au moyen d'une résistance (13), les électrodes étant en contact avec les articles textiles.

6. Procédé selon la revendication 5, **caractérisé en ce que** la tension est mise hors circuit ou baissée pour interrompre ou diminuer le flux de courant à travers les articles textiles.

7. Procédé selon la revendication 5, **caractérisé en ce que** la résistance est augmentée pour interrompre ou diminuer le flux de courant à travers les articles textiles.

8. Procédé selon l'une des revendications 1 à 7, **caractérisé en ce que** la production et/ou la détermination des tensions électriques et/ou la détermination du temps mort est réalisée par un microprocesseur.

9. Procédé selon l'une des revendications 1 à 7, **caractérisé en ce qu'**il est réalisé par un microprocesseur resp. par un microcontrôleur (3).
